# FASCICULE DE BREVET EUROPEEN

(11) **EP 0 826 015 B1**
(45) Date de publication et mention de la délivrance du brevet: **11.08.1999**
(21) Numéro de dépôt: 96913421.2
(22) Date de dépôt: 17.05.1996
(51) Int. Cl.: C08J 9/00, C02F 1/68, C08J 9/14

(54) **RESINE PHENOLIQUE EXPANSEE ET RETICULEE ET PROCEDE POUR SA FABRICATION**
GESCHÄUMTES VERNETZTES PHENOLHARZ UND VERFAHREN ZU DESSEN HERSTELLUNG
FOAMED AND CROSS-LINKED PHENOLIC RESIN AND METHOD FOR MAKING SAME

(30) Priorité: 18.05.1995 CH 146695
(43) Date de publication de la demande: 04.03.1998
(73) Titulaire: Transdiffusia S.A., 1208 Genève (CH)
(72) Inventeur: LAMARTINE, Roger, Jean, Paul, F-69100 Villeurbanne (FR); CHOQUARD, Philippe, CH-1223 Cologny (CH)
(74) Mandataire: Kiliaridis, Constantin
(86) Numéro de dépôt international: CH9600192
(87) Numéro de publication internationale: WO9636659

(56) Documents cités:
- FR-A- 2 073 083
- FR-A- 2 292 733
- DATABASE WPI Week 9311 9 Février 1993 Derwent Publications Ltd., London, GB; AN 93-088758 XP002008606 "Phenol resin foam for interior parts of car, .." & JP,A,05 032 814 (REBEN UTILITY K. K.)

## Description

La présente invention appartient au domaine des résines phénoliques réticulées. En particulier, elle concerne une nouvelle résine phénolique réticulée sous forme de mousse et un procédé de fabrication de cette mousse de résine phénolique réticulée ayant des propriétés spéciales superficielles. L'invention a également pour objet une installation pour la fabrication de la mousse phénolique.

Les pollutions accidentelles des eaux qui se produisent par les hydrocarbures en mer et sur terre et qui touchent donc la mer, le littoral et les eaux intérieures, sont devenues de plus en plus fréquentes et posent un très sérieux problème à l'environnement. Les moyens pour enrayer la pollution et pour enlever l'hydrocarbure répandu sont limités. On n'a pas encore trouvé, malgré tous les efforts de recherche déployés, de moyen simple à appliquer, ayant un effet sûr et fiable, et étant encore peu coûteux et simple à éliminer. Par exemple, on a essayé de rendre les hydrocarbures mouillables en répandant des surfactifs sur la surface d'eau polluée afin d'obtenir une dispersion dans l'eau mais cette méthode présente des risques de nocivité et n'élimine pas les hydrocarbures eux-mêmes. La meilleure méthode consiste sans doute à extraire les hydrocarbures de l'eau par absorption ou adsorption au moyen de corps solides qui sont alors beaucoup plus faciles à séparer et à récupérer de la surface contaminée.

On a donc proposé d'utiliser, par exemple, les absorbants suivants: des minéraux prétraités tels que la perlite et la bentonite; des matières fibreuses telles que les fibres de cellulose, les fibres de verre et la tourbe; des produits synthétiques, par exemple le polyuréthane, le polyéthylène, le polypropylène, les résines époxy, les polyesters; et encore des résines uréeformaldéhyde. Parmi ces matières, les produits hydrophobes sont à préférer car ils ont le meilleur pouvoir d'absorption; par exemple, le polypropylène à micropores présente un pouvoir d'absorption de 23 fois son poids tandis que la tourbe, une matière hydrophile, n'absorbe que 8,3 fois son poids d'hydrocarbures.

Selon le brevet français no. 2'073'083, on a également proposé d'utiliser une mousse phénolique pour la fixation d'huiles, de graisses, d'essence et produits similaires répandus sur la surface solides ou liquides, par exemple sur l'eau. Cependant, on ne trouve dans ce document aucune mention relative à la composition de la mousse, sauf qu'il s'agit d'une mousse de résine phénolique ou formol-phénolique, de ses propriétés, etc. Comme on démontre plus bas, les mousses phénoliques connues à ce jour ne sont pas très efficaces pour l'absorption de matières grasses vu leur hydrophilie.

Il y a donc un fort besoin d'une nouvelle matière absorbante plus efficace, utilisable pour combattre la pollution de l'environnement par les hydrocarbures.

La présente invention a donc pour but de mettre à disposition une nouvelle matière absorbante lipophile utilisable notamment comme moyen antipollution.

Ce but est atteint par la mousse phénolique selon l'invention qui est définie dans la première revendication indépendante. La seconde revendication indépendante concerne un procédé de fabrication de la nouvelle mousse, et la troisième revendication indépendante une installation pour la mise en oeuvre du procédé. La quatrième revendication enfin définit une utilisation de la mousse. Les revendications dépendantes ont pour objet des exécutions spéciales du sujet de leurs revendications indépendantes superordonnées.

Pour obtenir la mousse selon l'invention, il est nécessaire de combiner, de façon nouvelle et inattendue, au moins les composants suivants:
- une résine phénolique réactive, de préférence de type résol,
- un surfactif, de préférence de type copolymère de polyéther-polysiloxane ou de polyéther modifié par un copolymère de diméthylpolysiloxane,
- un agent réticulant sous forme d'oligomères phénoliques sulfonés, et
- un agent gonflant.

D'autres composants peuvent éventuellement être présents en plus, de préférence un ou plusieurs colorants et des stabilisants.

Ces composants seront décrits plus en détail dans ce qui suit.

Le résol. Il est connu de fabriquer des oligomères phénol-formol et de les polycondenser en présence de catalyseurs acides. Les oligomères, appelés résols, sont fabriqués à partir de phénols éventuellement substitués et de formaldéhyde en solution aqueuse, en mettant en oeuvre des rapports stoechiométriques spécialement choisis et un catalyseur basique. Les résols ont la tendance de polycondenser lentement; cette polycondensation est accélérée par un catalyseur acide, en général l'acide sulfurique, qui reste cependant tel quel dans le phénoplaste obtenu après la polycondensation du résol.

Il est déjà connu de fabriquer des mousses phénoliques en polycondensant, en présence d'un agent gonflant, des résines phénoliques encore liquides, la polycondensation étant effectuée par l'action d'un catalyseur acide qui ne participe pas comme réticulant aux réactions chimiques. De telles mousses sont utiles comme matière isolante au point de vue chaleur et bruit. Mais les désavantages de ces mousses résident également dans la présence d'un acide fort libre qui ne peut pas être éliminé par lavage car il est emprisonné dans les macromolécules du phénoplaste. En plus, ces mousses sont hydrophiles.

### Le surfactif.

Le surfactif est choisi spécialement pour produire la structure cellulaire de la mousse hydrophobe à fabriquer, d'une part, et pour lui conférer justement son hydrophobicité. Il est généralement introduit dans le résol au cours de la fabrication de la résine. Les surfactifs non ioniques et amphotères ne modifient pas la durée de vie des résols et sont utilisés préférentiellement.

Les surfactifs retenues dans le cadre de la présente invention doivent être hydrosolubles et présenter une valeur HLB ("hydrophilic lipophilic balance") ≥ 10, et ils doivent être stables en présence d'acides forts que constitue l'agent réticulant (acides sulfoniques).

On préfère l'utilisation de copolymères d'oxydes d'éthylène et de propylène, et particulièrement de différents composés organo-silicium, des polydiméthylsiloxanes, et des copolymères polysiloxane-polyéther et polysiloxane polyglycols. On citera comme exemples les copolymères silicone-glycol et les copolymères polysiloxane-polyéther. Cependant, ces classes de surfactifs ne sont que des exemples.

L'agent réticulant. Selon la présente invention, on a trouvé que certaines substances ayant un caractère acide peuvent avantageusement remplacer les catalyseurs acides tels que l'acide sulfurique, actuellement utilisés pour faire condenser les résols. On a trouvé que ces substances qui sont proposées par l'invention pour remplacer le catalyseur acide sont constituées par des oligomères phénoliques partiellement ou totalement sulfonés. Ces substances sont exactement de même nature que les résols, à l'exception de leurs substituants -SO₃H, et elles sont chimiquement combinées avec les résols et forment des ponts entre les molécules du résol; donc, elles ne sont pas physiquement emprisonnées dans le réseau du phénoplaste en formation mais bien incorporées dans ce réseau comme un constituant chimique de celui-ci.

L'invention utilise le nouvel agent réticulant sous forme d'oligomères phénoliques linéaires partiellement ou totalement sulfonés, de phénol sulfoné, d'oligomères phénoliques cycliques partiellement ou totalement sulfonés, ou de leurs mélanges, chaque mélange pouvant être additionné de phénol simple sulfoné. La diversité de ces agents réticulants confère à la mousse phénolique selon l'invention ses propriétés spéciales, c'est-à-dire on peut régler les propriétés finales de la mousse à fabriquer par un choix adéquat du réticulant.

Les oligomères phénoliques cycliques sulfonés sont en partie des substances connues; ils n'ont cependant pas encore été proposés comme additifs à des résols lors de leur polycondensation. Les oligomères phénoliques cycliques sulfonés sont par exemple décrits dans l'article "Synthesis and acid-base properties of calix[4], calix[6] and calix[8]arenes p-sulfonic acids" par J.P Scharff, M. Mahjoubi et R. Perrin, *New J. Chem.,* 1991, **15**, 883-887 mais leur utilisation selon l'invention, à savoir comme réticulant, n'a été ni suggérée ni divulguée.

L'agent gonflant. Ce produit est incorporé dans la masse formant la mousse pour créer ses pores. Les agents gonflants doivent être
- compatibles avec les surfactifs
- non inflammables, pas de point éclair
- à bas point d'ébullition, < 35 °C
- à faible chaleur latente de vaporisation, < 300 kJ/kg.

Ils peuvent être choisis dans les familles des hydrocarbures HC, des chlorofluorocarbures CFC, des hydrochlorofluorocarbone HCFC ou des hydrofluoroalcanes HFA, et des mélanges de substances choisies dans ces classes. Un exemple est le HCFC 141.

Additifs. Certains additifs peuvent être ajoutés à la formulation de départ de la mousse. On citera en particulier des colorants mais d'autres additifs rentrent également en ligne de compte, à savoir des stabilisants, par exemple les antioxydants et des anti-UV. Le colorant sert à donner à la mousse un aspect qui la distingue d'autres produits, et à pouvoir suivre le processus d'absorption lors de son utilisation.

Suivant les applications et utilisations des mousses selon l'invention, des colorants sont nécessaires. Les colorants azoïques sont retenus, et de préférence les colorants azoïques phénoliques.

Les colorants azoïques phénoliques sulfonés présentent l'avantage de pouvoir être utilisés directement dans le système réticulant; ils sont stables en milieu acide, ont des propriétés antioxydantes et apportent une acidité supplémentaire au système réticulant.

Les colorants introduits généralement à raison de 0,1 à 1 % en poids dans le réticulant sont des monomères tels que ceux de formule 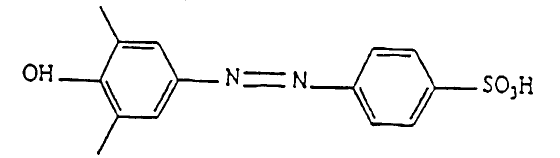 ou des oligomères cycliques azoïques de la famille des calixarènes colorants.

Le procédé préféré de fabrication de la mousse absorbante est généralement exécuté de manière suivante:

### 1. Fabrication du résol:

Elle se déroule en principe selon les techniques connues: Les composants, à savoir le phénol, la source du formaldéhyde et le catalyseur alcalin sont chargés dans un réacteur dans des proportions voulues, on fait réagir sous agitation le mélange dans des conditions précises et contrôlées de températures, on laisse le mélange réactionnel mûrir pendant un temps déterminé, et l'on récupère finalement le résol pour l'usage ultérieur. Le composant résol contient de préférence le surfactif qu'on ajoute au résol après ou pendant l'étape de mûrissage.

### 2. Préparation de l'agent réticulant:

L'agent réticulant est préparé à partir de phénol éventuellement substitué, d'un catalyseur acide, et d'une source de formaldéhyde, les oligomères obtenus sont plus ou moins sulfonés, et le réticulant est finalement récupéré et stocké pour l'usage subséquent. Si l'on désire que l'agent réticulant contienne des oligomères phénoliques cycliques sulfonés, on préfère préparer ces oligomères non sulfonés séparément, les sulfoner, puis les ajouter aux mélanges réactionnels ci-dessus avant leur stockage.

### 3. Mousse:

La fabrication de la mousse met en oeuvre les différents composants énumérés ci-dessus. Elle est conçue pour fonctionner en continu. On dose le résol (fabriqué selon la technique décrite ci-dessus), l'agent réticulant (voir également l'étape de fabrication ci-dessus) et l'agent gonflant dans une mélangeuse, dans des rapports préalablement déterminés. Il se produit dans la mélangeuse un mélange intime des composants introduits, et le gonflage est amorcé automatiquement car la réaction de réticulation du résol est exothermique ce qui a pour effet que le mélange est porté au-dessus de la température d'ébullition ou de la température de décomposition de l'agent gonflant, respectivement, par exemple 80 °C; cette température dépend naturellement de la nature de l'agent gonflant et des réactifs choisis. Ainsi, l'exothermicité de la réaction de réticulation est mise à profit pour entraîner l'évaporation de l'agent gonflant.

La réticulation du résol avec gonflage et la solidification de la mousse formée sont accomplis sur un tapis de coulée qui se déplace en continu au-dessous d'une tête de sortie de la mélangeuse. Le mélange réactionnel est donc déposé sur le tapis roulant qui peut être éventuellement thermostaté, sous forme de coulée qui s'expanse en quelques secondes et forme un boudin de mousse solide au bout du tapis. Ce boudin est ensuite déchiqueté en morceaux de grandeur et de forme désirées. Par exemple, selon la vitesse mécanique du dispositif de broyage choisie, on peut produire des morceaux de mousse de 5 sur 5 cm environ, utilisables pour l'antipollution, ou des flocons ou morceaux de toute autre grosseur si désiré.

L'installation de fabrication de la mousse selon l'invention comprend donc les unités suivantes:
- une unité de production du résol, comprenant un réacteur équipé d'un agitateur, d'une double enveloppe thermostatée, et les récipients et cuves nécessaires pour les matières premières: phénol, solution de soude caustique, paraformaldéhyde ainsi que les moyens de dosage et de véhiculation classiques. Cette unité comprend également des réacteurs-mûrisseurs pour effectuer la réaction finale, ces mûrisseurs sont équipés de régulation de température, et une cuve de stockage;
- une unité de production du réticulant sulfoné, comprenant, pour chaque constituant du mélange qui forme l'agent réticulant, au moins un réacteur équipé d'un agitateur, d'une double enveloppe thermostatée, et les récipients et cuves nécessaires pour les matières premières: phénol, acide sulfurique, formaline, eau et éventuellement d'autres adjuvants tels que des oligomères phénoliques cycliques. Cette unité comprend également des cuves mélangeuses pour mélanger les différents constituants de l'agent réticulant ainsi que des cuves de stockage et les dispositifs auxiliaires classiques;
- une unité de production de la mousse, comprenant des pompes de remplissage, une mélangeuse équipée de cuves d'alimentation en résine qui contient le surfactif, en réticulant et en agent gonflant, des dispositifs de dosage volumétrique ou pondéral, un banc ou un tapis de coulée,
- une unité de déchiquetage et de stockage, et
- éventuellement une unité de conditionnement et/ou d'emballage.

L'invention sera décrite plus en détail à l'aide du dessin d'un exemple de réalisation de l'installation, et les exemples de fabrication eux-mêmes.

Le dessin annexé montre les différentes unités décrites ci-dessus, à savoir:
- La fig. 1: est une représentation schématique d'une unité de fabrication du résol;
- la fig. 2: est une représentation schématique d'une unité de production du réticulant comprenant une sulfonation,
- la fig. 3A: est une vue schématique de côté d'une unité de production de la mousse, et
- la fig. 3B: est la suite vers la droite de l'unité selon la fig. 3A et qui montre également une unité de broyage ou de déchiquetage de la mousse avec un dispositif de stockage.

Les figures ont pu être dessinées sous forme de schéma car les différents éléments des unités sont normalement des appareils et dispositifs connus; en plus, les dispositifs et organes auxiliaires comme thermomètres, pompes, éléments et organes de réglage et de commande, les alimentations en courant électriques ou en d'autres énergies ne sont pas dessinés non plus car ils sont bien connus de l'homme du métier.

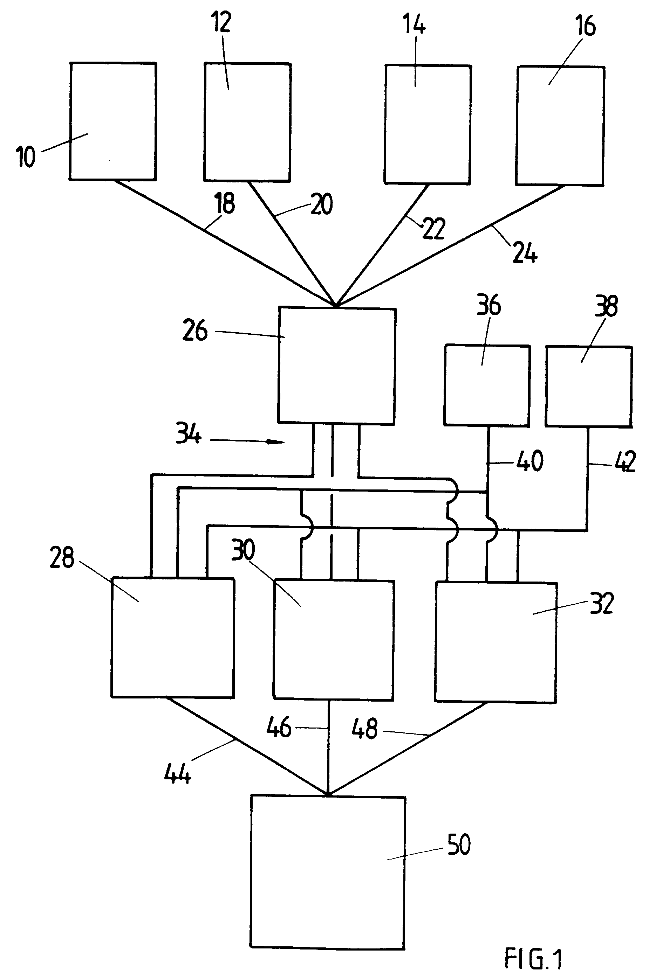

La fig. 1 montre schématiquement l'unité de fabrication du résol. Les matières et substances à faire réagir se trouvent dans des cuves de stockage 10 à 16. La cuve 10 contient du phénol, normalement contenant environ 10 % en poids d'eau pour le garder plus facilement à l'état liquide; la cuve 10 est munie d'une isolation thermique, d'un échangeur de chaleur, et d'une pompe motorisée à débit fixe (ces éléments ne sont pas représentés). La cuve 12 est prévue pour contenir une solution aqueuse de soude caustique (NaOH); elle est en acier spécial. La cuve 14 contient simplement de l'eau, et la cuve 16 est un silo pour le paraformaldéhyde avec dispositif de soutirage, une installation pour maintenir le contenu sous azote, un vibreur sur cuve et une vis d'extraction avec un contrôlé de débit.

Les quatre cuves de stockage 10 à 16 sont reliées par des conduites 18, 20, 22 et 24, respectivement, au réacteur 26 qui est équipé d'un agitateur, d'une double enveloppe pour recevoir un fluide thermostaté, et d'une sonde thermométrique.

L'unité selon la fig. 1 comprend en plus au moins un réacteur pour compléter la réaction principale; on appelle ces réacteurs des "mûrisseurs"; dans la fig. 1, on a représenté trois mûrisseurs 28, 30 et 32 qui sont reliés par les conduites 34 à la sortie du réacteur 26. En plus, on peut amener dans les mûrisseurs un stabilisant, stocké dans la cuve 36, et également, si cela est désiré dans cette étape du procédé déjà, le surfactif depuis la cuve 38. Les conduites 40 et 42 relient les cuves 36 et 38, respectivement, aux mûrisseurs 28, 30 et 32. Les mûrisseurs sont équipés d'une double enveloppe thermostatée et d'un mélangeur. La sortie de chaque mûrisseur est reliée par une conduite 44, 46 et 48, respectivement, à une grande cuve de stockage du résol 50.

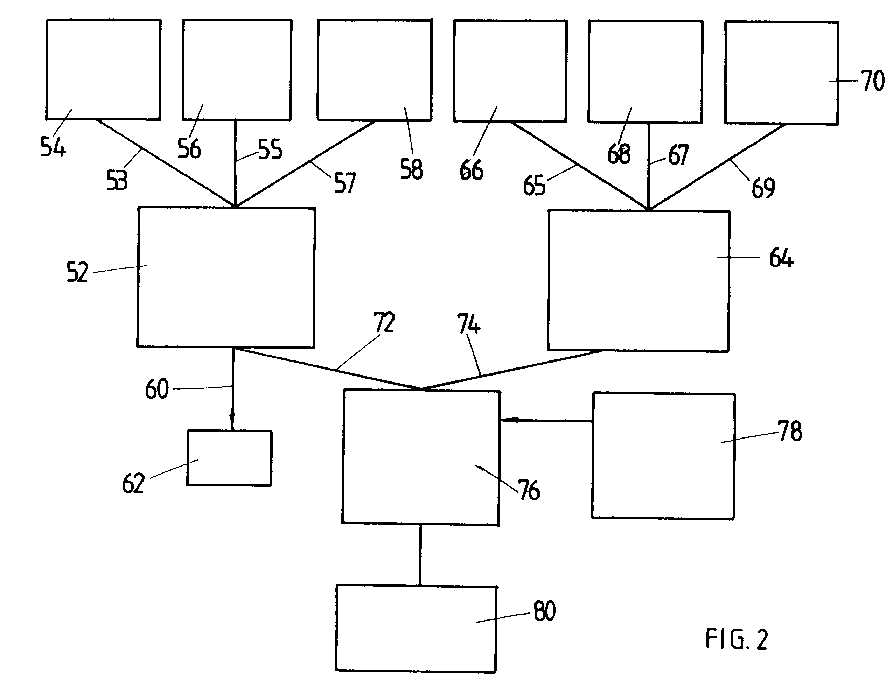

La fig. 2 montre un schéma de principe de fabrication des réticulants oligomères et monomères phénoliques sulfonés linéaires et cycliques ainsi que du phénol sulfoné. Un réacteur 52, de type "Grignard", a une capacité de 1250 litres; il est en acier inox à double enveloppe et isolé. Ce réacteur 52 comprend encore un agitateur, un condensateur ascendant, et une sonde thermométrique. Le réacteur 52 est relié par des conduites 53, 55 et 57, respectivement, à une cuve 54 contenant du phénol, une cuve 56 contenant de la formaline (une solution de formaldehyde dans l'eau), et une cuve 58 contenant de l'acide sulfurique. Une conduite 60 permet de prélever l'eau de condensation au cours de l'opération et de l'acheminer vers un réservoir 62.

Un second réacteur 64, identique au réacteur 52, est prévu pour la fabrication de phénol sulfoné. Il est relié par les conduites 65, 67 et 69, respectivement, à une cuve 66 pour le phénol, une cuve 68 pour l'acide sulfurique, et une cuve 70 pour l'eau.

Des conduites 72 et 74 mènent à partir des réacteurs 52 et 64, respectivement, dans un mûrisseur-mélangeur 76 du type déjà décrit en connexion avec la fig. 1. On peut régler le rapport de mélange du produit sortant des réacteurs 52 et 64 en réglant les quantités passant par les conduites 72 et 74. Une cuve 78 contient des oligomères phénoliques cycliques sulfonés, et on peut transférer, si désiré, ces produits dans le mûrisseur 76. Le réticulant mélangé est ensuite vidé dans la cuve de stockage 80.

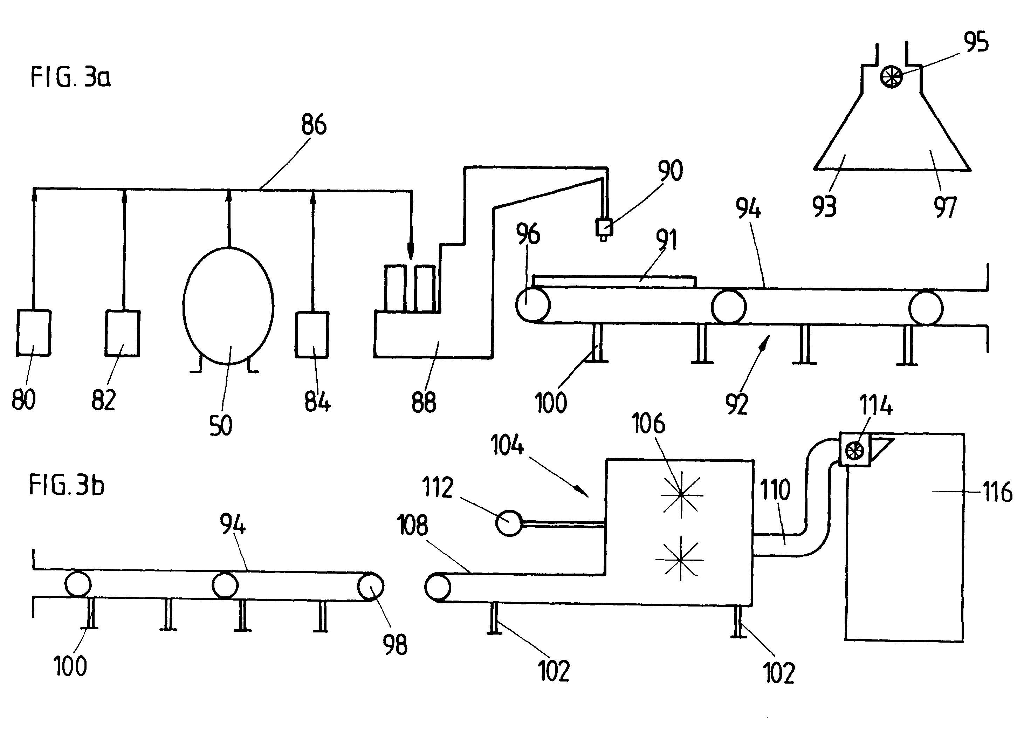

Les fig. 3A et 3B montrent un schéma de principe de fabrication de la mousse à partir des composants mentionnés ci-dessus. Le réticulant, l'agent gonflant, le résol contenant déjà le surfactif et un solvant de rinçage sont stockés dans les réservoirs 80, 82, 50 et 84, respectivement, et les quantités désirées de chaque composant sont transférées, en utilisant des dispositifs de dosage non représentés, à partir des cuves 80, 82 et 50 dans plusieurs conduites 86 qui sont reliées à l'entrée de la mélangeuse 88. Dans cette mélangeuse 88, les composants sont intimement mélangés, et le mélange obtenu est amené vers une tête de coulée 90, située au-dessus d'une auge 91 au-dessous de laquelle se déplace un tapis roulant 94 sans fin qui est renvoyé par des cylindres inverseurs 96, 98.

Le tapis roulant 94 est monté sur des pieds 100. Il a par exemple une longueur de 15 mètres et une largeur de 80 cm, et il est entraîne par un moteur à vitesse variable (non représenté). Un extracteur 93 pour évacuer les gaz qui s'échappent de la coulée sortant de la tête 90 et ayant formé un boudin sur le tapis roulant, est monté au-dessus du tapis roulant 94; l'extracteur comprend une hotte 97 et un ventilateur 95 qui aspire l'air contenant les gaz de réaction et qui les envoie vers une installation de purification d'air (non représentée).

A la fin du tapis roulant, à savoir au-dessus du cylindre inverseur 98, le boudin de mousse formé est transféré sur un autre tapis roulant 108 qui fait partie d'une déchiqueteuse 104, montée sur pieds 102. La mousse est déchiquetée en passant entre les roues à pales 106 qui sont entraînées en sens inverse par un moteur non représenté. Les flocons de mousse formés par déchiquetage sont entraînés, suspendus dans de l'air, par un ventilateur 114 qui les dépose dans une chambre de stockage et de conditionnement 116.

Le déroulement du procédé selon l'invention sera illustré encore plus en détail par quelques exemples de réalisation. Il est cependant à noter que l'invention n'est pas limitée à ces exemples.

### Exemple 1

### A) Fabrication du résol

Dans le réacteur 26 (Fig. 1), on charge 862,5 kg de phénol contenant des petites quantités d'eau et 20,5 kg d'une solution aqueuse de NaOH. Dans ce mélange, on introduit 367 kg de paraformaldéhyde petit à petit en 10 heures. La température est réglée à une valeur entre 40 et 50 °C. Après la fin d'introduction, l'agitation est maintenu pendant au moins 10 heures à la température indiquée. Le résol obtenu est transféré par gravité dans les mûrisseurs 28, 30 et 32. On laisse refroidir le résol à la température ambiante, on le maintient sous agitation pendant 24 heures, et on ajoute la quantité requise de surfactif et, éventuellement, de stabilisants antioxydant et anti-UV. Finalement, le résol est transféré dans la cuve de stockage 50.

### B) Fabrication d'un réticulant

a) Dans le réacteur 52 (Fig. 2), on charge 220 kg de phénol à une température comprise entre 40 °C et 50 °C. On ajoute lentement sous agitation 10 litres d'acide sulfurique puis on introduit 45 litres de formaline en portions et sous agitation. L'agitation est ensuite maintenue pendant 1 heure, et on laisse reposer quelques heures sur quoi on prélève par décantation la couche d'eau qui s'est formée. On introduit ensuite lentement et sous agitation 70 litres d'acide sulfurique ce qui est accompagné d'une montée de température. L'agitation est maintenue pendant 12 heures, et le mélange des oligomères phénoliques sulfonés linéaires obtenu est transféré dans le mûrisseur-mélangeur 76.
b) Dans le réacteur 64 (Fig. 2), on charge 55 kg de phénol, et l'on porte la température à 50 °C environ. Ensuite, on introduit 28 litre d'acide sulfurique lentement sous agitation. L'agitation est maintenue à une température de 60 à 75 °C pendant 12 heures. Après refroidissement, 45 litres d'eau sont introduits lentement dans le réacteur sous agitation. Le phénol sulfoné obtenu dans le réacteur 64 est transféré dans le mélangeur 76. Le réticulant obtenu est ensuite transféré dans la cuve de stockage 80.

La nature et les propriétés de la mousse dépendent du rapport des réticulants a) et b).
c) Il est également possible d'ajouter au mélange des réticulants a) et b) un réticulant c) de type d'oligomères phénoliques cycliques sulfonés, par exemple de la classe des acides calixarène sulfoniques tel que l'acide calix[6]arène p-sulfonique. Ces composés qui n'ont jamais été proposés comme réticulants de résols, sont par exemple décrits comme tels dans l'article "Synthesis and acid-base properties of calix[4], calix[6] and calix[8]arenes p-sulfonic acids" par J.P Scharff, M. Mahjoubi et R. Perrin, *New J. Chem.,* 1991, 15, 883-887.

Un réticulant combiné préféré contient 2 à 4 parties de réticulant a) pour 1 partie de réticulant b). Un autre mélange réticulant préféré contient de 55 à 70 % d'oligomères phénoliques linéaires sulfonés a), de 20 à 30 % de phénol sulfoné à 60 % environ (en solution dans l'eau), et de 10 à 15 % d'acide calix[6]arène p-sulfonique. Les pourcentages donnés sont en poids.

### C) Fabrication d'une mousse

Dans la mélangeuse 88 (Fig. 3A), on introduit en continu par minute 7,8 kg de résol dont 0,15 kg de surfactif, 1,2 kg de mélange de réticulant, et 0,8 kg d'agent gonflant. Ces quatre composants sont mélangés intimement. Le mélange est coulé à travers la tête de coulée 90 sur le tapis de coulée 94. La coulée s'expanse en quelques secondes et forme un boudin d'une section d'environ 60 cm de largeur et 30 cm de hauteur. Le boudin refroidi est conduit en continu dans la déchiqueteuse 104 où il est cassé en flocons qui sont ensuite collectés dans la chambre de stockage 116.

### Exemple 2

Le mélange suivant (en parties en poids) est introduit dans la mélangeuse de l'unité de production de la mousse:

800 parties de résol dont 16 parties de surfactif, 150 parties de réticulant (un mélange de réticulants a), b) et c) dans un rapport pondéral d'environ 62 : 24 : 13), et 80 parties d'agent gonflant. Il se forme une mousse à cellule fine.

### Exemple 3

Le mélange suivant (en parties en poids) est introduit dans la mélangeuse de l'unité de production de la mousse:

800 parties de résol dont 16 parties de surfactif, 150 parties de réticulant (un mélange de réticulants a) et c) dans un rapport pondéral d'environ 75 : 25), et 80 parties d'agent gonflant. Il se forme une mousse souple à cellule fine.

La mousse ainsi obtenue est utilisée comme les autres produits antipolluants: elle est répandue sur le site de pollution, et elle absorbe très rapidement les substances polluantes. Ensuite, la mousse qui, grâce à son hydrophobicité, avait flotté sur le milieu aqueux auquel elle avait été appliquée, continue à flotter et peut être récupérée par des moyens classiques normalement employés. On a trouvé que la mousse selon l'invention non seulement peut être fabriquée à un prix relativement bas et présente d'autre part un pouvoir d'absorption extraordinaire; on a constaté effectivement lors des essais que la mousse absorbe jusqu'à 72 fois son poids de matières lipophiles.

L'utilisation de la mousse ne se borne pas à son application aux milieux aqueux. On peut utiliser la mousse selon l'invention également pour le nettoyage et l'action curative dans l'industrie et plus particulièrement, sur le sol. La mousse pourrait alors se présenter sous différentes formes dont une poudre à répandre. De nombreuses autres utilisations et applications sont possibles.

Une autre application de la mousse selon l'invention est dans le domaine de l'hygiène et de la santé. Cette application concerne le nettoyage, la filtration et l'absorption tant dans les milieux de vie courante telle que la récupération des huiles de friture, de filtres de hottes aspirantes, de poudre à récurer ainsi que des serviettes absorbantes multi-usage.

Pour la fabrication d'un phénoplaste sous forme de mousse absorbante, on utilise, selon l'invention, un résol, un réticulant défini ci-dessus, un surfactif, un agent gonflant, et éventuellement un colorant, et il reste bien entendu que ces constituants présentent le minimum pour arriver à une mousse désirée. On peut donc avantageusement utiliser plusieurs résols, des mélanges de réticulants, de surfactifs, d'agents gonflants etc., et encore ajouter, si nécessaire ou désiré, d'autres adjuvants tels que les antioxydants, des additifs influant sur le procédé de fabrication ou les propriétés de la mousse à fabriquer et des anti-UV influant sur le comportement de la mousse à la lumière.

## Revendications

1. Mousse cellulaire à base de résine phénol-formol, caractérisée en ce qu'elle est constituée d'un résol phénol-formol réticulé au moyen d'un réticulant choisi parmi (a) les acides p-sulfoniques de calix[4], calix[6] ou calix[8]arène, (b) les acides sulfoniques d'oligomères phénoliques linéaires préparés à partir de phénol sulfoné, d'une source de formaldéhyde et d'un catalyseur acide, et (c) les acides sulfoniques obtenus en sulfonant des oligomères linéaires préparés a partir de phénol non sulfoné, d'une source de formaldéhyde et d'un catalyseur acide, ce réticulant pouvant en plus contenir du phénol sulfoné, la mousse contenant encore un surfactif hydrosoluble et ayant une valeur HLB d'au moins 10, la mousse présentant un caractère hydrophobe permettant son usage pour absorber, retenir et véhiculer les liquides gras oléophiles.

2. Mousse selon la revendication 1, caractérisée en ce qu'elle contient en plus un colorant.

3. Mousse selon la revendication 1 ou 2, caractérisée en ce qu'elle se présente sous forme de flocons ayant une densité de 7 à 9 kg/m³.

4. Mousse selon la revendication 1, caractérisée par un pouvoir d'absorption d'hydrocarbures, de graisses animales et végétales et d'autres polluants hydrophobes jusqu'à 72 fois son poids.

5. Mousse selon l'une des revendications précédentes, caractérisée en ce qu'elle est réticulée par un réticulant qui est un mélange d'oligomères phénoliques linéaires tout ou partiellement sulfonés et du phénol tout ou partiellement sulfoné.

6. Mousse selon l'une des revendications 1 à 4, caractérisée en ce qu'elle est réticulée par un réticulant qui est un mélange d'oligomères phénoliques linéaires et cycliques, tout ou partiellement sulfonés.

7. Mousse selon l'une des revendications précédentes, caractérisée en ce que le surfactif est un composé organique ayant une valeur HLB ≥ 10.

8. Procédé de fabrication de la mousse selon l'une des revendications précédentes, caractérisé en ce qu'on prépare un mélange apte à mousser à partir (A) d'un résol, (B) d'un agent réticulant choisi parmi les oligomères phénoliques linéaires et cycliques, tout ou partiellement sulfonés, éventuellement additionnés de phénol sulfoné, (C) d'un surfactif et (D) d'un agent gonflant, et l'on dépose le mélange sur un support pour effectuer la formation et la solidification de la mousse.

9. Procédé selon la revendication 8, caractérisé en ce qu'on ajoute au mélange des composants (A) à (D) encore un colorant, de préférence un colorant azoïque, phénolique ou calixarénique.

10. Procédé selon la revendication 8 ou 9, caractérisé en ce que l'agent réticulant (B) est un mélange d'oligomères phénoliques linéaires tout ou partiellement sulfonés et du phénol tout ou partiellement sulfoné.

11. Procédé selon la revendication 8 ou 9, caractérisé en ce que l'agent réticulant (B) est un mélange d'oligomères phénoliques linéaires et cycliques, tout ou partiellement sulfonés.

12. Procédé selon l'une des revendications 8 à 11, caractérisé en ce que le surfactif (C) est un composé organique ayant une valeur HLB ≥ 10.

13. Installation pour la fabrication de la mousse selon l'une des revendications 1 à 7, caractérisée en ce qu'elle comporte
- une unité de production du résol,
- une unité de production du réticulant sulfoné,
- une unité de production de la mousse, et
- une unité de déchiquetage et de conditionnement de la mousse.

14. Utilisation de la mousse selon l'une quelconque des revendications 1 à 7 pour l'absorption de liquides gras oléophiles en milieu acide ou basique.

15. Utilisation selon la revendication 14 pour combattre la pollution des eaux par des hydrocarbures, en particulier du pétrole et de ses dérivés.

16. Utilisation selon la revendication 14 pour combattre la pollution en milieu terrestre.

17. Utilisation selon la revendication 14 dans le domaine de l'hygiène et de la santé.

## Patentansprüche

1. Schaum mit Zellstruktur auf Basis eines Phenol-Formol-Harzes, dadurch gekennzeichnet, dass er aus einem Phenol-Formol-Resol besteht, das mit einem Vernetzungsmittel ausgewählt aus (a) Calix[4]-, Calix[6]- oder Calix[8]-aren-p-sulfonsäuren, (b) Sulfonsäuren von linearen Phenololigomeren, hergestellt aus sulfoniertem Phenol, einer Formaldehydquelle und einem sauren Katalysator, und (c) Sulfonsäuren, erhalten durch Sulfonierung von linearen Oligomeren aus unsulfoniertem Phenol, einer Formaldehydquelle und einem sauren Katalysator vernetzt ist, wobei das Vernetzungsmittel zusätzlich sulfoniertes Phenol enthalten kann, und wobei der Schaum weiterhin ein wasserlösliches Tensid mit einem HLB-Wert von mindestens 10 enthält und der Schaum hydrophob ist, wodurch er zum Absorbieren, Zurückhalten und Transportieren von oleophilen fettartigen Flüssigkeiten verwendbar ist.

2. Schaum nach Anspruch 1, dadurch gekennzeichnet, dass er zusätzlich einen Farbstoff enthält.

3. Schaum nach Anspruch 1 oder 2, dadurch gekennzeichnet, dass er in Form von Flocken mit einer Dichte von 7 bis 9 kg/m³ vorliegt.

4. Schaum nach Anspruch 1, gekennzeichnet durch eine Absorptionsfähigkeit für Kohlenwasserstoffe, tierische und pflanzliche Fette und andere hydrophobe Verunreinigungen bis zum 72fachen seines Eigengewichtes.

5. Schaum nach einem der vorstehenden Ansprüche, dadurch gekennzeichnet, dass er mit einem Vernetzungsmittel vernetzt ist, welches ein Gemisch aus vollständig oder teilweise sulfonierten linearen Phenololigomeren und vollständig oder teilweise sulfoniertem Phenol ist.

6. Schaum nach einem der Ansprüche 1 bis 4, dadurch gekennzeichnet, dass er mit einem Vernetzungsmittel vernetzt ist, welches ein Gemisch aus vollständig oder teilweise sulfonierten linearen und cyclischen Phenololigomeren ist.

7. Schaum nach einem der vorstehenden Ansprüche, dadurch gekennzeichnet, dass das Tensid eine organische Verbindung mit einem HLB-Wert ≥ 10 ist.

8. Verfahren zur Herstellung des Schaumes nach einem der vorstehenden Ansprüche, dadurch gekennzeichnet, dass man ein aufschäumfähiges Gemisch aus (A) einem Resol, (B) einem Vernetzungsmittel, ausgewählt aus vollständig oder teilweise sulfonierten linearen und cyclischen Phenololigomeren, eventuell unter Zusatz von sulfoniertem Phenol, (C) einem Tensid und (D) einem Treibmittel herstellt und dann das Gemisch zur Bildung und Verfestigung des Schaumes auf einer Unterlage ablegt.

9. Verfahren nach Anspruch 8, dadurch gekennzeichnet, dass man dem Gemisch der Bestandteile (A) bis (D) noch einen Farbstoff zusetzt, vorzugsweise einen Azofarbstoff, Phenolfarbstoff oder Calixarenfarbstoff.

10. Verfahren nach Anspruch 8 oder 9, dadurch gekennzeichnet, dass das Vernetzungsmittel (B) ein Gemisch aus vollständig oder teilweise sulfonierten linearen Phenololigomeren und vollständig oder teilweise sulfoniertem Phenol ist.

11. Verfahren nach Anspruch 8 oder 9, dadurch gekennzeichnet, dass das Vernetzungsmittel (B) ein Gemisch aus vollständig oder teilweise sulfonierten linearen und cyclischen Phenololigomeren ist.

12. Verfahren nach einem der Ansprüche 8 bis 11, dadurch gekennzeichnet, dass das Tensid (C) eine organische Verbindung mit einem HLB-Wert ≥ 10 ist.

13. Anlage zur Herstellung des Schaumes nach einem der Ansprüche 1 bis 7, dadurch gekennzeichnet, dass sie
- eine Einheit zur Herstellung des Resols,
- eine Einheit zur Herstellung des sulfonierten Vernetzungsmittels,
- eine Einheit zur Schaumherstellung und
- eine Einheit zum Zerkleinern und Konditionieren des Schaumes umfasst.

14. Verwendung des Schaumes nach einem der Ansprüche 1 bis 7 zur Absorption von oleophilen fettartigen Flüssigkeiten in einem sauren oder basischen Medium.

15. Verwendung nach Anspruch 14 zur Bekämpfung von Wasserverschmutzungen durch Kohlenwasserstoffe, insbesondere durch Erdöl und dessen Derivate.

16. Verwendung nach Anspruch 14 zur Bekämpfung von Verschmutzungen des Erdbodens.

17. Verwendung nach Anspruch 14 auf dem Gebiet der Hygiene und des Gesundheitswesens.

## Claims

1. Cellular foam on the base of a phenol-formol resin, characterized in that it is constituted by a phenol-formol resol, cross-linked by means of a cross-linking agent selected from (a) the p-sulfonic acids of calix[4], calix[6] or calix[8]arene, (b) the sulfonic acids of linear phenolic oligomers prepared from sulfonated phenol, a formaldehyde source and an acidic catalyst, and (c) of sulfonic acids obtained by sulfonating linear oligomers prepared from non sulfonated phenol, a formaldehyde source, and an acidic catalyst, this cross-linking agent optionally further containing sulfonated phenol, said foam additionally containing a water soluble surface active agent and having a HLB value of at least 10, said foam having a hydrophobic character allowing its use for absorbing, retaining and transporting oleophilic fatty liquids.

2. The foam of claim 1, characterized in that it further contains a coloring agent.

3. The foam of claim 1 or 2, characterized in that it is in the form of flakes having a density of from 7 to 9 kg/m³.

4. The foam of claim 1, characterized by an absorption power for hydrocarbons, animal and vegetable fats and other hydrophobic pollutants up to 72 times its weight.

5. The foam of any one of the preceding claims, characterized in that it is cross-linked by a cross-linking agent which is a mixture of completely or partially sulfonated linear phenolic oligomers and of completely or totally sulfonated phenol.

6. The foam of any one of claims 1 to 4, characterized in that it is cross-linked by a cross-linking agent which is a mixture of completely or partially sulfonated linear and cyclic phenolic oligomers.

7. The foam of any one of the preceding claims, characterized in that the surface active agent is an organic compound having a HLB value of ≥ 10.

8. A process for the manufacture of the foam according to any one of the preceding claims, characterized in that a foamable mixture is prepared starting from (A) a resol, (B) a cross-linking agent selected from completely or partially sulfonated linear and cyclic phenolic oligomers, optionally further containing sulfonated phenol, (C) a surface active agent, and (D) a blowing agent, and the mixture is poured on a support for effecting the formation and the solidification of the foam.

9. The process of claim 8, characterized in that a coloring agent, preferably an azoic, phenolic or calix-arenic coloring agent, is added to the mixture of components (A) to (D).

10. The process of claim 8 or 9, characterized in that the cross-linking agent (B) is a mixture of completely or partially sulfonated linear phenolic oligomers and of completely or totally sulfonated phenol.

11. The process of claim 8 or 9, characterized in that the cross-linking agent (B) is a mixture of completely or partially sulfonated linear and cyclic phenolic oligomers.

12. The process of any one of claims 8 to 11, characterized in that the surface active agent (C) is an organic compound having a HLB value of ≥ 10.

13. Installation for the manufacture of the foam according to any one of claims 1 to 7, characterized in that it comprises
- a resol production unit,
- a unit for the production of sulfonated cross-linking agent,
- a unit for the production of the foam, and
- a unit for the shredding and the conditioning of the foam.

14. The use of the foam according to any one of claims 1 to 7 for the absorption of oleophilic fatty liquids in an acidic or a basic medium.

15. The use according to claim 14 for combating water pollution by hydrocarbons, in particular by mineral oil or its derivatives.

16. The use according to claim 14 for combating pollution in a terrestrial medium.

17. The use of claim 14 in the field of hygienic and health services.
